Europäisches Patentamt

European Patent Office

Office européen des brevets

(11) Publication number: **0 031 195**

**A1**

(12) **EUROPEAN PATENT APPLICATION**

(21) Application number: **80303600.3**

(22) Date of filing: **13.10.80**

(51) Int. Cl.³: **B 01 D 35/12**

(30) Priority: **23.10.79 GB 7936658**

(43) Date of publication of application:
**01.07.81 Bulletin 81/26**

(84) Designated Contracting States:
**AT BE DE FR IT LU NL**

(71) Applicant: **DOSCO OVERSEAS ENGINEERING LIMITED**
**British Fields Ollerton Road**
**Tuxford, Newark Nottinghamshire, NG22 0PQ(GB)**

(72) Inventor: **Peters, Alexander Robb**
**2 Poplar Close Crabtree Park**
**Worksop, Notts(GB)**

(72) Inventor: **Blaydes, Stephen Oswin**
**20 Hereford Close**
**Worksop. Notts(GB)**

(74) Representative: **Carpmael, John William Maurice et al,**
**CARPMAELS & RANSFORD 43 Bloomsbury Square**
**London, WC1A 2RA(GB)**

(54) Fluid strainer or filter.

(57) The invention relates to strainers or filters, particularly such oil strainers of the type which have removable filter elements held, against spring bias in a casing.

The strainer comprises a casing (10) with inlet apertures (11) and outlet apertures (12). Spring biased shutters (17 and 21) are held in their open positions by the filter element (13) when the closure cap (24) is screwed down.

On removal of the filter element (13) the springs (18 and 22) cause shutters (17 and 21) respectively to close the inlet and outlet apertures automatically.

FIG. 1.

EP 0 031 195 A1

## FLUID STRAINER OR FILTER

This invention relates to a fluid strainer or filter. The term strainer will be used hereinafter but is intended to encompass a filter or a strainer.

Filters are known which consist of a casing with an inlet and outlet for fluid and a filter member inserted into the casing against spring bias.

It is also known to have such filters in which, when the filter is removed the inlet and outlet port can be closed.

An object of this invention is to provide a simplified construction of filter which automatically operates to ensure that shutters move to close the inlet and outlet ports on removal of the filter element.

According to the present invention a strainer or filter comprises a strainer or filter element removably located in a casing, inlet and outlet apertures in the wall of the casing, a first spring biased shutter adapted to open and close the inlet aperture to the casing, a second spring biased shutter adapted to open and close the outlet aperture of the casing, the two shutters being separate and both being held open against spring bias by the strainer or filter element when in its normal operative position in the casing, but automatically moving to their closed positions on removal of the element whereby flow of fluid through the casing is prevented during removal of the filter element.

The filter element is preferably supported within the casing by a ring at each end which can be removed with the filter element. Preferably the ring at the outer end of the casing is adapted to abut a closure member for the casing so that when the closure member is screwed into its fully closed position it moves the filter element together with its upper and lower rings down against spring bias thereby opening both shutters simultaneously.

Preferably the closure member is in the form of a cap with a quick start thread which engages a corresponding thread on the upper ring supporting the filter element.

The closure member may be held in position by a bolt or screw and may include removable locking means to prevent inadvertent removal of the closure member.

The casing preferably includes stop members to prevent the shutters from moving beyond a predetermined distance when the filter element is removed from the casing.

In the accompanying drawing,

Fig. 1 is a vertical section through a strainer or filter embodying the present invention; and

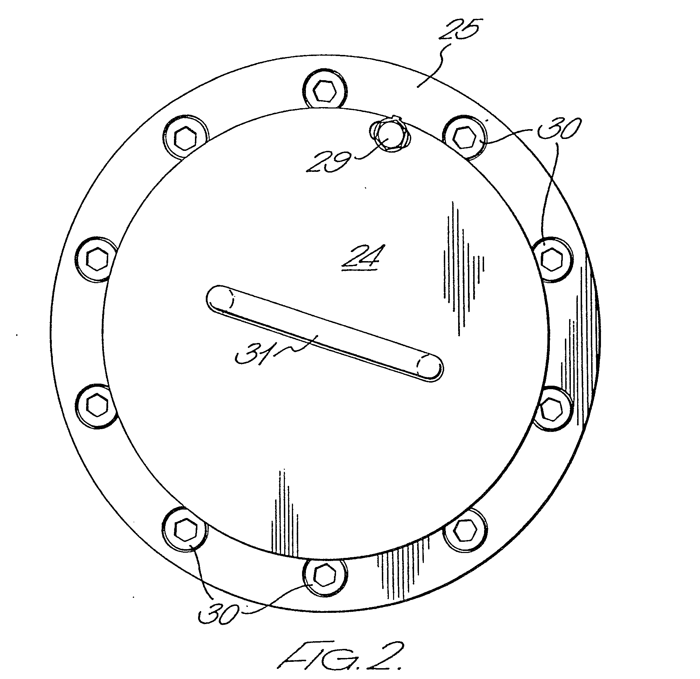

Fig. 2 is a plan view of the same strainer.

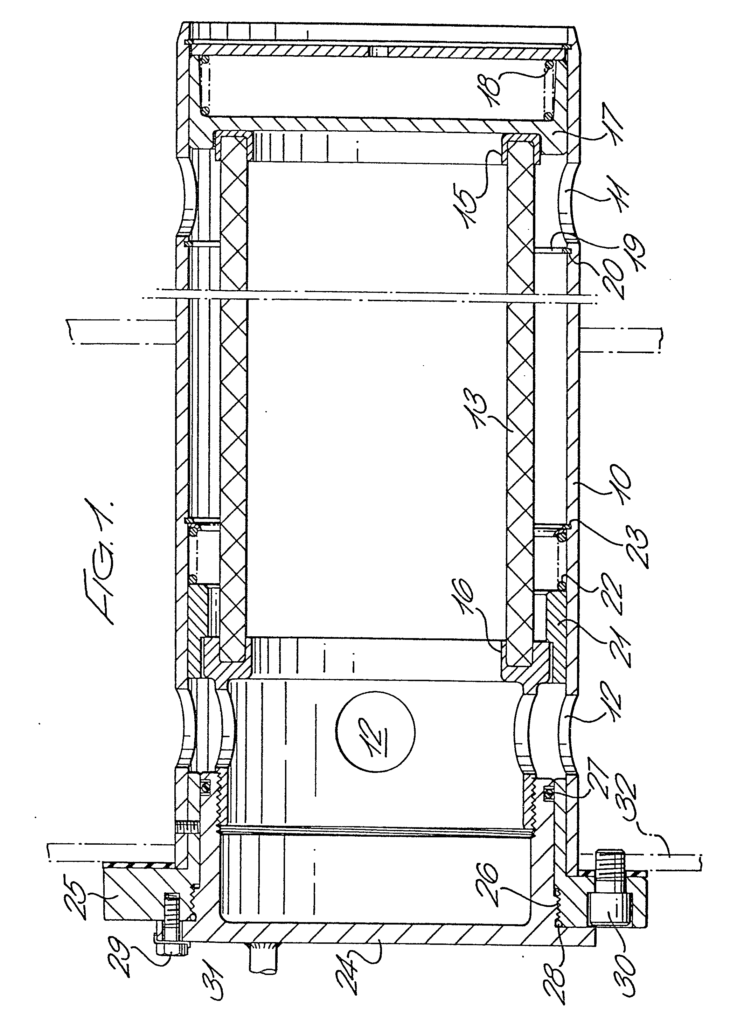

The strainer shown in Fig. 1 is of the type shown as an oil suction strainer which is adapted to be immersed in the oil or other liquid to be strained and to suck the oil through the inlet aperture in the casing, through the filter element, and out through the outlet aperture.

The strainer comprises a casing 10 which has inlet apertures 11 and outlet apertures 12. Clearly there could be a row of such apertures all round the exterior of the casing.

Within the casing is a filter element 13 supported at one end by a ring 15 and at the other end by an elongated ring structure 16.

A shutter 17 of annular form is provided to open and close the apertures 11 and is biased towards the closing position by a spring 18. As shown in Fig. 1, the shutter is in the open position leaving the apertures 11 clear. Movement of the shutter 17 is limited by a ring 19 let into groove 20 in the wall of the casing 10.

There is a second shutter 21 which is biased by spring 22 towards its closing-position in which it closes the ring of apertures 12. The spring 22 is retained in position by a ring 23 let into the wall of the casing 10.

The filter 13 is retained in the position shown by an end closure cap 24 which is screwed into a mounting flange 25 screwed to the top end of the casing 10.

The closure member 24 is secured to the mounting flange 25 by a quick-start thread 26 and is sealed against egress of fluid by sealing rings 27 and 28,

The closure member 24 is held in place by a hexagon headed bolt 29 and the mounting flange 25 is attached to fixed structure 32 by a row of bolts 30. The closure member 24 had a handle 31 to enable it to be removed from the filter casing.

When the filter 13 is to be removed for cleaning or replacement the bolt 29 is undone and the closure member 24 unscrewed by means of handle 31 so that the filter together with the members 16 and 15 can be withdrawn. This withdrawal allows the springs 18 and 22 to move shutters 17 and 21 to positions where they close respective inlet and outlet apertures 11 and 12. Thus as the closure member 24 is removed and the filter element withdrawn the shutters automatically close off the inlet and outlet to the casing.

The filter 13 can either be supported by a cage or it can act as its own structural support so that the two end members 15 and 16 and the filter 13 together form the removable element.

0031195

- 4 -

<u>CLAIMS</u>

1. A fluid filter comprising a substantially cylindrical casing (10), a filter element (13) removably received within the casing and valves (17,21) adapted to open and close inlet and outlet apertures (11,12) said valves (17,21) being biased towards the closed positions of the inlet and outlet apertures but held in their open positions when the filter element (13) is in an operative position in the casing (as in Fig.1) characterised in that the inlet and outlet apertures (11,12) are located in the cylindrical side wall of the casing (10) and each have a separate valve (17,21 respectively) and each valve is individually spring biased (18,22) towards its respective closed position and in that each valve (17,21) is held in its open position by the filter element (13) when the filter element is in said operative position in the casing, the valves (17,21) moving to their closed positions under the influence of their respective springs (18,22) when the filter elment (13) is removed so as to prevent the flow of fluid through the casing (10) during such removal.

2. A filter as claimed in claim 1 characterised in that the filter element (13) is supported within the casing (10) by two rings (15,16), one at each end of the filter element (13), the rings being removable with the filter element (13).

3. A filter as claimed in claim 2 characterised in that the ring (16) at the outer end of the casing is adapted to abut a closure member (9) for the casing (10) so that when the closure member (9) is screwed into its fully closed position it moves the filter element (13) together with its upper and lower rings (16, 15) down against spring bias thereby opening both valves (6, 7) simultaneously.

4. A filter as claimed in claim 3 characterised in that the closure member (9) is in the form of a cap with a quick start thread which engages a corresponding thread on one of the rings (16) supporting the filter element(13).

FIG.1.

1/2

0031195

FIG. 2.

European Patent Office

EUROPEAN SEARCH REPORT

| Category | DOCUMENTS CONSIDERED TO·BE RELEVANT | |
|---|---|---|
| | Citation of document with Indication, where appropriate, of relevant passages | Relevant to claim |
| | GB - A - 1 070 029 (BENDIX) * fig. 1, 2 * -- | 1 |
| | DE - A - 1 909 130 (PUROLATOR FILTER) * fig. 1 * -- | 1,3 |
| A | GB - A - 1 106 707 (BENDIX) * fig. 2, 3 * -- | |
| A | US - A - 1 720 380 (ALEMITE) * fig. 1 * -- | |
| A | US - A - 1 746 274 (ALEMITE) * fig. 1 * -- | |
| A | US - A - 1 746 336 (CHRYSLER) * fig. * -- | |
| A | US - A - 1 782 702 (STEWART-WARNER) * fig. 2 * -- | |
| A | US - A - 2 431 782 (AIR-MAZE) * fig. 2 * -- | |
| A | US - A - 3 363 762 (D.G. GRISWOLD) * fig. 1, 4 * -- | |
| A | US - A - 3 400 821 (FLUID DYNAMICS) * fig. 1 * -- ./.. | |

CLASSIFICATION OF THE APPLICATION (Int. Cl.³)

B 01 D 35/12

TECHNICAL FIELDS SEARCHED (Int. Cl.³)

B 01 D 27/10
B 01 D 35/12
B 01 D 35/14

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| Place of search Berlin | Date of completion of the search 12-03-1981 | Examiner KÜHN |

EPO Form 1503.1 06.78

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | US - A - 3 926 806 (SCHROEDER BROTHERS) <br> * positions 20, 30 * | | |
| | -- | | |
| A | US - A - 4 052 307 (WIX) <br> * fig. 3, 5 * | | |
| | -- | | |
| A | DE - A - 1 536 794 (FERCH & NABBEN) <br> * fig. 1, 2 * | | TECHNICAL FIELDS SEARCHED (Int. Cl.³) |
| | ---- | | |